# EUROPÄISCHE PATENTSCHRIFT

(11) **EP 1 392 505 B1**
(45) Veröffentlichungstag und Bekanntmachung des Hinweises auf die Patenterteilung: **11.10.2006**
(21) Anmeldenummer: 02761898.2
(22) Anmeldetag: 02.04.2002
(51) Int. Cl.: B32B 17/10, G02B 5/28

(54) **WÄRMEABSORBIERENDES SCHICHTSYSTEM**
HEAT-ABSORBING LAYER SYSTEM
SYSTEME A COUCHES, ABSORBANT LA CHALEUR

(30) Priorität: 10.04.2001 DE 10117786
(43) Veröffentlichungstag der Anmeldung: 03.03.2004
(73) Patentinhaber: Bayer MaterialScience AG, 51368 Leverkusen (DE)
(72) Erfinder: DÖBLER, Martin, 40593 Düsseldorf (DE)
(86) Internationale Anmeldenummer: PCT/EP2002/003615
(87) Internationale Veröffentlichungsnummer: WO 2002/083410

(56) Entgegenhaltungen:
- WO-A-99/36808
- US-A- 4 504 109
- PATENT ABSTRACTS OF JAPAN vol. 1998, no. 08, 30. Juni 1998 (1998-06-30) & JP 10 077360 A (NIPPON SHOKUBAI CO LTD), 24. März 1998 (1998-03-24) in der Anmeldung erwähnt

## Beschreibung

Die Erfindung betrifft ein wärmeabsorbierendes Schichtsystem, das mindestens eine erste Schicht (A), eine zweite Schicht (B) und eine dritte Schicht (C) enthält sowie dessen Herstellung, Verwendung und daraus hergestellte Erzeugnisse.

Im Automobilbau werden aus Sicherheitsgründen, wie beispielsweise Hochsicherheit bei Verkehrsunfällen, aber auch aus Gründen der größeren Designfreiheit thermoplastische Verscheibungsmaterialien anstelle von Glas gewünscht. Ein Problem bei dem Einsatz von transparenten Thermoplasten für Verscheibungselemente im Automobilbau ist die zu hohe Transmission im nahen Infrarot (NIR), was im Sommer zu einer unerwünscht starken Erwärmung des Fahrgastinnenraumes führen kann.

Für Anwendungen im Bereich Automobilverscheibung ist für die meisten Fälle eine Transmission im sichtbaren (LTA-Wert) von mindestens 70 % vorgeschrieben. Dieser Wert ist in SAE J 1796 (Ausgabe Mai 1995) definiert.

Für die Effizienz der Wärmeabsorption wird der TDS-Wert (Solar Direct Transmittance) verwendet gemäß SAE J 1796, Ausgabe Mai 1995. Der Wert beschreibt, wie viel % der solaren Energie die Probe durchdringt und somit zur Erwärmung des Innenraumes beiträgt. Je höher der TDS-Wert ist, desto schlechter sind die wärmeabweisenden Eigenschaften des Systems.

In der Literatur sind verschiedene wärmeabweisende Systeme, die im NIR eine geringe Transmission haben, beschrieben worden. Einerseits sind Oberflächenbeschichtungen oder Lacksysteme bekannt, andererseits gibt es auch infrarotabsorbierende Additive für transparente thermoplastische Polymere.

Infrarotabsorber, die als Zusatz zu Thermoplasten eingesetzt werden und die Erwärmung einschränken, sind beispielsweise in J. Fabian, H. Nakazumi, H. Matsuoka, Chem. Rev. 92, 1197 (1992), US 5 712 332 und JP 06240146 A) beschrieben. Nachteilig an derartigen Zusätzen ist die beschränkte Wärmeabschirmung und/oder deren geringe thermische und/oder fotochemische Beständigkeit.

Als NIR-Schutz sind ferner metallisierte Folien bekannt (siehe z.B. DE-A 195 37 263), die mit dem transparenten Thermoplasten des Verscheibungselements verklebt werden. Derartige Folien werden im Handel beispielsweise unter dem Namen Scotchtint® der Firma 3M angeboten. Nachteilig an derartigen System ist jedoch, dass die Transmission im sichtbaren Bereich zu gering ist. Ein LTA-Wert von größer als 70 % bei gleichzeitig gutem Wärmeschutz (TDS-Wert < 50 %) ist mit diesem System nicht erreichbar.

Schließlich sind in der Literatur Folien bekannt, die aufgrund von Interferenzeffekten NIR-reflektierende Eigenschaften besitzen. Solche Folien und deren Einsatz als wärmeabsorbierende Schichtsysteme für transparente thermoplastische Verscheibungselemente sind beispielsweise in den WO 97/01778 und WO 97/01440 beschrieben. Interferenzfolien dieser Art sind im Handel beispielsweise unter der Bezeichnung "Solar Reflecting Film, N-NPE 1458LP" von der Firma 3M erhältlich. Nachteilig an derartigen Systemen ist jedoch ebenfalls, dass ein zu geringer Anteil der solaren Wärmestrahlung abgeschirmt wird und die mit derartigen Folien ausgerüsteten Verscheibungselemente zu hohe TDS-Werte aufweisen.

Neben den geforderten spektralen Eigenschaften ist es für Außenanwendungen ferner erforderlich, dass die wärmeabsorbierenden Systeme eine hohe Langzeitwitterungsbeständigkeit, d. h. eine hohe Langzeitlichtbeständigkeit gegen Verfärbung und Ausbleichen, aufweist.

In der JP 10-077360 A werden dünne, filmartige wärmeabsorbierende Schichtsysteme beschrieben, die gleichzeitig (A) einen Phthalocyanin-Infrarot-Absorber und (B) einen Ultraviolett-Absorber enthalten. Hierdurch soll die Witterungsbeständigkeit der Wärmeschutzschicht verbessert werden. Gemäß einem Ausführungsbeispiel wird eine filmartige Beschichtungsschicht mit einer Dicke von 0,13 mm vorgeschlagen, die sowohl Phthalocyanin-Infrarot-Absorber, als auch Ultraviolett-Absorber enthält. Eine derartige Beschichtungsschicht weist in 48-Stunden Schnellbewitterungstests zwar eine akzeptable Witterungsbeständigkeit auf. Nachteilig ist jedoch die schlechte Langzeitwitterungsbeständigkeit bei Bewitterungstests von mehr als 500 Stunden. Ferner weisen die in dieser Veröffentlichung beschriebenen dünnen filmartigen Beschichtungsschichten unzureichende optische Eigenschaften auf und sind daher für die Anwendung in der Automobilverglasung ungeeignet.

Es ist ferner allgemein bekannt, dass bestimmte Thermoplaste durch Verwendung von UV-absorbierenden Lacken und/oder coextrudierten Schichten mit hohem Gehalt an UV-Absorber geschützt werden können. So ist etwa aus der EP 0 110 221 A bekannt, die Witterungsbeständigkeit von Polycarbonat-Kunststofftafeln durch Beschichtung mit einer Schicht, enthaltend 3 bis 15 Gew.% eines UV-Absorber, zu verbessern. Die in dieser Druckschrift beschriebenen Mehrschichtsysteme enthalten keinen Infrarot-Absorber.

Schließlich werden in der EP 0 774 551 A Wärmefilter auf der Basis von anorganischen Pigmenten beschrieben, welche eine UV-absorbierende Schutzschicht aufweisen. Anorganische Pigmente haben den Nachteil, dass sie sich in Thermoplasten nicht lösen, so dass keine im sichtbaren Bereich transparente Formkörper mit geringer Trübung resultieren.

Der Erfindung liegt die Aufgabe zugrunde, ein wärmeabsorbierendes Schichtsystem bereitzustellen, das bei möglichst einfacher und preiswerter Herstellungsweise eine hervorragende Langzeitwitterungsbeständigkeit sowie ausgezeichnete optische Eigenschaften wie Transparenz und Glanz aufweist und zur Wärmeisolierung von transparenten Kunststoffverscheibungselementen eingesetzt werden kann. Das wärmeabsorbierende Beschichtungssystem soll ein ausgewogenes Verhältnis von LTA-und TDS-Werten, bestimmt nach SAE J 1796, aufweisen. Insbesondere sollen die wärmeabsorbierenden Beschichtungssysteme einen TDS-Wert von weniger als 50 % und gleichzeitig einen LTA von größer als 70 % aufweisen.

Diese Aufgabe wird erfindungsgemäß durch ein transparentes wärmeabsorbierendes Schichtsystem gelöst, das eine erste Schicht (A), eine zweite Schicht (B) und eine dritte Schicht (C) enthält und worin Schicht (A) Ultraviolett-Absorber enthält, Schicht (B) organischen Infrarot-Absorber und Ultraviolett-Absorber enthält und Schicht (C) eine im Infrarotbereich reflektierende Interferenzschicht ist.

Das erfindungsgemäße wärmeabsorbierende Schichtsystem zeichnet sich durch einen dreischichtigen Aufbau aus, in dem die Wärmeabsorption sowohl durch die Interferenzschicht Schicht (C) als auch durch eine organischen Infrarot-Absorber und Ultraviolett-Absorber enthaltende Schicht (B) erfolgt. Darüber hinaus enthält das erfindungsgemäße Schichtsystem noch eine weitere Schicht (A) mit zusätzlichem Ultraviolett-Absorber, die den in Schicht (B) enthaltenen Infrarot-Absorber vor Zersetzung durch Sonneneinstrahlung schützt.

Überraschend wurde gefunden, dass das erfindungsgemäße Schichtsystem neben einem besonders ausgewogenen Verhältnis von LTA- und TDS-Werten eine ausgezeichnete Witterungsbeständigkeit aufweist. Die erfindungsgemäßen Schichtsysteme weisen mit einem LTA-Wert von > 70 % eine hohe Transparenz und gleichzeitig mit TDS-Werten von weniger als 50 % eine geringe Wärmetransmission auf. Die erfindungsgemäßen Schichtsysteme zeichnen sich darüber hinaus durch eine ausgezeichnete Langzeitwitterungsbeständigkeit aus, was sie besonders geeignet zum Einsatz als Verscheibungselemente für Außenanwendungen macht.

Schicht (B) des erfindungsgemäßen Schichtsystems zeichnet sich dadurch aus, dass sie sowohl organischen Infrarot-Absorber als auch Ultraviolett-Absorber enthält. Durch das gemeinsame Vorliegen der beiden Additive in derselben Schicht wird ein Großteil des empfindlichen organischen Infrarot-Absorbers vor UV-Strahlung geschützt. Zusätzlich wird der organische Infrarot-Absorber durch eine weitere Schicht, enthaltend Ultraviolett-Absorber (Schicht A, "UV-Schicht"), vor Zersetzung durch UV-Strahlung geschützt. Da die UV-Schicht (Schicht A) u.a. dem Schutz von NIR-Farbstoff in Schicht (B) vor UV-Strahlen dienen soll, ist es vorteilhaft, Schicht (A) in Richtung der einfallenden Lichteinstrahlung oberhalb von Schicht (B) anzuordnen.

Die Interferenzschicht (C) des erfindungsgemäßen Schichtsystems ist eine im nahen Infrarotbereich reflektierende Interferenzschicht. Erfindungsgemäß geeignete Interferenzschichten (C) sind beispielsweise selektiv reflektierende Wechselschichtsysteme, die mindestens zwei transparente Schichten (C1) und (C2) mit unterschiedlichen Brechungsindizes enthalten.

Als Schicht C einsetzbare Wechselschichtsysteme sind Schichtsysteme, welche aus mehreren Schichten ("Quaterwave-Schichten") mit unterschiedlichem Brechungsindex bestehen. Gemäß den allgemein bekannten Regeln der Optik lassen sich im nahen Infrarot selektiv reflektierende Anordnungen erhalten. Bevorzugt geeignet sind einerseits thermoplastische Wechselschichtsysteme, welche beispielsweise durch Coextrusion hergestellt werden, und andererseits Wechselschichtsysteme bestehend aus Schichten von Metallen, Metalloxiden, Metallnitriden und/oder Metalloxynitriden.

Ganz besonders bevorzugt werden aufgrund der besseren Verarbeitbarkeit und Verformbarkeit thermoplastischen Wechselschichtsysteme verwendet, wie beispielsweise der von der Firma 3M angebotene Film "Solar Reflecting Film, N-NPE 1458 LP".

Beginnend mit der der Lichteinstrahlung zugewandten Seite ist folgender Schichtaufbau des erfindungsgemäßen Schichtsystems vorteilhaft:
Schicht (A) - Schicht (B) - Schicht (C) oder
Schicht (A) - Schicht (C) - Schicht (B).

In diesem Fall ist besonders vorteilhaft, wenn Schicht (A) als Lack oder als polymere Schicht und Schicht (B) als polymere Schicht ausgebildet ist.

Gemäß einer bevorzugten Ausführungsform der Erfindung umfasst das erfindungsgemäße Schichtsystem ferner ein Substrat (S) auf Basis von Glas oder einem transparenten thermoplastischen Polymeren. Besonders bevorzugt ist ein Substrat (S) auf Basis von Polycarbonat oder Polyestercarbonat. In diesem Fall weist das erfindungsgemäße Schichtsystem, beginnend mit der der Lichteinstrahlung zugewandten Seite, vorzugsweise folgenden Schichtaufbau auf:
Schicht (A) - Schicht (B) - Substrat (S) - Schicht (C) oder
Schicht (A) - Substrat (S) - Schicht (B) - Schicht (C) oder
Schicht (A) - Substrat (S) - Schicht (C) - Schicht (B) oder
Schicht (A) - Schicht (C) - Substrat (S) - Schicht (B) oder
Schicht (A) - Schicht (B) - Schicht (C) - Substrat (S) oder
Schicht (A) - Schicht (C) - Schicht (B) - Substrat (S).

Ganz besonders bevorzugt weist das erfindungsgemäße Schichtsystem, beginnend mit der der Lichteinstrahlung zugewandten Seite, folgenden Schichtaufbau auf:
Schicht (A) - Schicht (B) - Substrat (S) - Schicht (C) oder
Schicht (A) - Substrat (S) - Schicht (B) - Schicht (C).

Falls Schicht (B) als Substrat (S) ausgebildet ist, weist Schicht (B) vorzugsweise eine Dicke von 1 bis 30 mm, insbesondere 2 bis 8 mm, am bevorzugtesten 3 bis 5 mm auf.

Vorteilhaft ist ferner, wenn Schicht (A) oder Schicht (B) als Substrat (S) ausgebildet ist. Ganz besonders bevorzugt ist, wenn Schicht (B) als Substrat (S) ausgebildet ist.

Es wurde ferner gefunden, dass es vorteilhaft ist, wenn die einzelnen Schichten des erfindungsgemäßen Schichtsystems in bestimmten Dicken ausgestaltet sind.

Die Schichten (A) und (B) weisen vorzugsweise eine Dicke von jeweils 1 bis 100 µm auf. Sie können jeweils als Lack oder als coextrudierte Schicht ausgebildet sein. In ersterem Fall weist die Schicht vorzugsweise eine Dicke von 3 bis 5 µm, in letzterem Fall eine Dicke von 30 bis 80 µm auf. Falls Schicht (A) oder (B) als Substrat (S) ausgebildet ist, weist diese vorzugsweise eine Dicke von 1 bis 30 mm, insbesondere 3 bis 5 mm auf.

Schicht (C) weist vorzugsweise eine Dicke von 0,1 bis 200 µm auf. Sie ist vorzugsweise als Folie ausgebildet.

Das Substrat (S) weist vorzugsweise eine Dicke von 1 bis 30 mm, insbesondere von 3 bis 5 mm auf.

Das erfindungsgemäße Schichtsystem weist ein ausgezeichnetes Transparenz- und Trübungsverhalten bei gleichzeitig hervorragender Langzeitwitterungsbeständigkeit auf. Insbesondere zeichnet es sich dadurch aus, dass es neben einem TDS-Wert von kleiner als 50 % einen LTA-Wert von größer als 70 % aufweist. Sowohl herstellungstechnisch, als auch eigenschaftsspezifisch für die Anwendung in der Automobilverglasung hat es sich als besonders vorteilhaft herausgestellt, wenn NIR/UV-Schicht (Schicht B) und UV-Schicht (Schicht A) als coextrudierte Polymerschichten in den entsprechenden Dicken ausgebildet sind.

Gemäß einer bevorzugten Ausführungsform der Erfindung enthält Schicht (B) als einzige Schicht im Schichtsystem organische IR-Absorber.

Gemäß einer weiteren bevorzugten Ausführungsform der Erfindung enthält das erfindungsgemäße Schichtsystem neben den Schichten (A), (B) und (C) noch mindestens eine weitere transparente Schicht (D), welche vorzugsweise weder einen organischen Infrarot-, noch einen Ultraviolett-Absorber enthält. Schicht (D) wird auch als "Klarschicht" bezeichnet und dient der Verbesserung der Kratzfestigkeit oder der Erhöhung der mechanischen Steifigkeit. Im erfindungsgemäßen Schichtsystem können eine oder mehrere Klarschichten vorhanden sein. Vorzugsweise werden 1 bis 3 Klarschichten, besonders bevorzugt 1 Klarschicht eingesetzt. Die Klarschichten können an beliebiger Stelle im Schichtsystem, d.h. ober-, unterhalb und/oder zwischen den Schichten (A), (B) und (C), angeordnet werden. Besonders vorteilhaft ist jedoch ein Schichtsystem, in dem die Klarschicht (D) als oberste Schicht, bezogen auf die Sonneneinstrahlung, angeordnet ist. Hinsichtlich des Materials der Klarschicht (D) liegen keine besonderen Einschränkungen vor; in der Regel ist es jedoch vorteilhaft, die Klarschicht als Polymer- oder Glasschicht auszubilden. Als Polymerschichten kommen insbesondere Schichten aus transparenten Thermoplasten in Frage. Besonders geeignete transparente Thermoplasten sind Polycarbonate oder Copolycarbonate. Für die optischen Eigenschaften des Schichtsystems ist es vorteilhaft, wenn in Schicht (D) dasselbe Polymer wie in den übrigen Schichten eingesetzt wird. Bei einem erfindungsgemäßen Schichtsystem, bei dem die Schichten (A) und/oder (B) beispielsweise Schichten auf Basis von Polycarbonat sind, ist es vorteilhaft, wenn auch Schicht (D) eine Schicht auf Basis von Polycarbonat ist.

Schicht (D) kann als Lack oder als coextrudierte Schicht ausgebildet sein. In ersterem Fall weist Schicht (D) vorzugsweise eine Dicke von 0,1 bis 30 µm, insbesondere von 0,3 bis 10 µm auf. In letzterem Fall weist Schicht (D) vorzugsweise eine Dicke von 0,01 bis 30 mm, insbesondere von 3 bis 5 mm auf.

Organische Infrarotabsorber, die zum Einsatz im erfindungsgemäßen Schichtsystem geeignet sind, sind Verbindungen, welche ihr Absorptionsmaximum im nahen Infrarot zwischen 700 nm und 1500 nm besitzen. Geeignet sind literaturbekannte Infrarot-Absorber, wie sie z. B. in M. Matsuoka, Infrared Absorbing Dyes, Plenum Press, New York, 1990 stoffklassenmäßig beschrieben sind. Besonders geeignet sind Infrarot-Absorber aus den Stoffklassen der Phthalocyanine, der Naphthalocyanine, der Metallkomplexe, der Azofarbstoffe, der Anthraquinone, der Quadratsäurederivate, der Immoniumfarbstoffe, Perylene sowie der Polymethine. Davon sind ganz besonders Phthalocyanine und Naphthalocyanine geeignet. Aufgrund der verbesserten Löslichkeit in Thermoplasten sind Phthalocyanine und Naphthalocyanine mit sperrigen Seitengruppen vorzuziehen.

Hinsichtlich der Menge des in Schicht (B) enthaltenen organischen Infrarot-Absorbers liegen keine besonderen Beschränkungen vor, solange die gewünschte Absorption von Wärmestrahlung und eine ausreichende Transparenz des Schichtsystems gewährleistet ist. Als besonders vorteilhaft hat es sich erwiesen, wenn Schicht (B) organischen Infrarot-Absorber in einer Menge von 0,001 bis 10 g/m², insbesondere von 0,1 bis 1 g/m² enthält. Je nach Extinktionskoeffizient und Schichtdicke der NIR/UV-Schicht (Schicht B) werden die Infrarot-Absorber vorzugsweise in Konzentrationen zwischen 1 und 10.000 ppm eingesetzt, bevorzugt zwischen 10 und 1.000 ppm und ganz besonders bevorzugt zwischen 20 und 400 ppm. Besonders geeignet sind auch Mischungen von Infrarot-Absorbern. Der Fachmann kann mit Farbstoffen unterschiedlicher Wellenlängen der Absorptionsmaxima eine Optimierung der Absorption im nahen Infrarotbereich erreichen.

Zum Einsatz im erfindungsgemäßen Schichtsystem geeignete Ultraviolett-Absorber sind Verbindungen, welche ein Absorptionsmaximum zwischen 280 und 370 nm bevorzugt zwischen 320 und 350 nm besitzen. Derartige Verbindungen und deren Herstellung sind literaturbekannt und sind beispielsweise in den EP 0 839 623 A, WO 96/15102 und EP 0 500 496 A beschrieben. Für den Einsatz im erfindungsgemäßen Schichtsystem besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin® 234, Ciba Spezialitätenchemie, Basel), 2-(2'-Hydroxy-5'-(tert.-octyl)-phenyl)-benzotriazol (Tinuvin® 329, Ciba Spezialitätenchemie, Basel), 2-(2'-Hydroxy-3'-(2-butyl)-5'-(tert.-butyl)-phenyl)-benzotriazol (Tinuvin® 350, Ciba Spezialitätenchemie, Basel), Bis-(3-(2H-benztriazolyl)-2-hydroxy-5-tert.-octyl)methan, (Tinuvin® 360, Ciba Spezialitätenchemie, Basel), 2-(Hydroxy-2-hydroxyphenyl)-4,6-diphenyl-1,3,5-triazin (Tinuvin® 1577, Ciba Spezialitätenchemie, Basel), sowie das Benzophenon 2,4-Dihydroxy-benzophenon (Chimasorb22®, Ciba Spezialitätenchemie, Basel), 2-Propenoicacid, 2-cyano-3,3-diphenyl-, 2,2-bis[[(2-cyano-1-oxo-3,3-diphenyl-2-propenyl)oxy]methyl]-1,3-propanediylester (9CI) (Uvinul® 3030, BASF AG Ludwigshafen). Es können auch Mischungen dieser Ultraviolett-Absorber eingesetzt werden.

Ferner können auch nanoskalige anorganische UV-Absorber mit oder ohne organische UV-Absorber verwendet werden. Bevorzugt sind TiO₂, ZnO und CeO₂. Die Größe dieser Partikel ist kleiner als 100 nm: Die Herstellung ist bekannt.

Hinsichtlich der Menge des im Schichtsystem enthaltenen Ultraviolett-Absorbers liegen keine besonderen Beschränkungen vor. Gemäß einer bevorzugten Ausführungsform der Erfindung enthält Schicht (A) Ultraviolett-Absorber in einer Menge von 0,1 bis 40 Gew.%, insbesondere von 1 bis 10 Gew.%. Als vorteilhaft hat sich ferner erwiesen, wenn Schicht (B) Ultraviolett-Absorber in einer Menge von 0,1 bis 10 Gew.%, insbesondere 0,2 bis 1 Gew.% enthält.

Hinsichtlich des Basismaterials für die Schichten (A), (B) und (C), (D) und (S) liegen keine besonderen Beschränkungen vor, solange das Material eine hohe Transparenz und Witterungsbeständigkeit aufweist und somit für den Einsatz in der Automobilverglasung geeignet ist. Als besonderes vorteilhaft hat sich jedoch herausgestellt, wenn die einzelnen Schichten des Schichtsystems Schichten auf Basis von Polymeren oder Lacken sind. Dies bedeutet, dass die organischen Infrarot-Absorber und/oder Ultraviolett-Absorber, soweit in den einzelnen Schichten enthalten, in eine Polymer- oder Lackschicht eingebracht sind.

Vorzugsweise werden transparente thermoplastische Polymere eingesetzt.

Transparente thermoplastische Polymere im Sinne der Erfindung sind z. B. Polymerisate von ethylenisch ungesättigten Monomeren und/oder Polykondensate von bifunktionellen reaktiven Verbindungen. Beispiele für transparente thermoplastische Polymere sind z. B. Polycarbonate oder Copolycarbonate auf Basis von Diphenolen, Poly- oder Copolyacrylate und Poly- oder Copolymethacrylat wie z. B. Poly- oder Copolymethylmethacrylate sowie Copolymere mit Styrol wie z. B. transparentes Polystyrolacrylnitril (PSAN) oder Polymere auf der Basis von Ethylen und/oder Propylen sowie aromatische Polyester wie PET, PEN oder PETG und transparente thermoplastische Polyurethane. Ferner können auch Polymere auf Basis von zyklischen Olefinen (z. B. TOPAS®, ein Handelsprodukt der Firma Ticona), Poly- oder Copolykondensate der Terephthalsäure wie z. B. Poly- oder Copolyethylenterephthalate (PET oder CoPET) oder PETG eingemischt werden.

Auch Mischungen von mehreren transparenten thermoplastischen Polymeren sind möglich.

Bevorzugt sind Polycarbonate oder Copolycarbonate.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Polycarbonate im Sinn der vorliegenden Erfindung sind sowohl Homopolycarbonate als auch Copolycarbonate; die Polycarbonate können in bekannter Weise linear oder verzweigt sein.

Die Herstellung der Polycarbonate erfolgt in bekannter Weise aus Diphenolen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P.R. Müller, H.

Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, sowie deren kernalkylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-di-isopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z. B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate ist nur ein Diphenol eingesetzt, im Fall der Copolycarbonate sind mehrere Diphenole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind sowohl Monophenole als auch Monocarbonsäuren. Geeignete Monophenole sind Phenol selbst, Alkylphenole wie Kresole, p-tert.-Butylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol, 2,4,6-Trijodphenol, p-Jodphenol, sowie deren Mischungen.

Ein bevorzugter Kettenabbrecher ist p-tert.-Butylphenol und Phenol.

Geeignete Monocarbonsäuren sind weiterhin Benzoesäure, Alkylbenzoesäuren und Halogenbenzoesäuren.

Bevorzugte Kettenabbrecher sind ferner die Phenole der Formel (I) 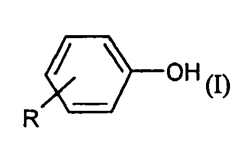 worin
- R: Wasserstoff oder ein C₁ bis C₃₀-Alkylrest, linear oder verzweigt ist, bevorzugt tert.-Butyl ist oder ein verzweigter oder unverzweigter C₈ und/oder C₉-Alkylrest ist.

Die Menge an einzusetzendem Kettenabbrecher beträgt bevorzugt 0,1 bis 5 Mol%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri(4-hydroxyphenyl)-heptan, 1,3,5-Tri(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenylisopropyl)-phenol, 2,6-Bis-(2-hydroxy-5'-methyl-benzyl)-4-methylphenol, 2-(4-hydroxyphenyl)-2-(2,4-dihydroxyphenyl)-propan, Hexa-(4(4-hydroxyphenylisopropyl)-phenyl)-orthoterephthalsäureester, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 bis 2 Mol%, bezogen wiederum auf Mole an jeweils eingesetzten Diphenolen.

Die Verzweiger können entweder mit den Diphenolen und den Kettenabbrechern in der wässrig alkalischen Phase vorgelegt werden, oder in einem organischen Lösungsmittel gelöst vor der Phosgenierung zugegeben werden. Im Fall des Umesterungsverfahrens werden die Verzweiger zusammen mit den Diphenolen eingesetzt.

Die erfindungsgemäßen Zusammensetzungen können ferner noch übliche Polymeradditive enthalten, wie z. B. die in EP-A 0 839 623, WO 96/15102 und EP-A 0 500 496 beschriebenen Antioxidantien und Entformungsmittel, aber auch literaturbekannte Flammschutzmittel, Glasfasern, Füllstoffe, Schaummittel, Pigmente, optische Aufheller oder Farbstoffe, in den für die jeweiligen Thermoplasten üblichen Mengen. Bevorzugt sind Mengen von jeweils bis zu 5 Gew.%, bevorzugt 0,01 bis 5 Gew.%, bezogen auf die Menge der Zusammensetzungen, besonders bevorzugt 0,01 bis 1 Gew.%, bezogen auf die Menge der Zusammensetzungen. Auch Mischungen mehrerer Zusatzstoffe sind geeignet.

Vorzugsweise betragen die als Verunreinigung vorhandenen Ionengehalte in den thermoplastischen Polycarbonaten weniger als 10 ppm, besonders bevorzugt weniger als 5 ppm.

Die Maßnahmen zur Herstellung der thermoplastischen Polycarbonate sind dem Fachmann geläufig.

Im Fall von mehreren thermoplastischen Schichten können die thermoplastischen Kunststoffe verschiedenartig oder gleichartig sein.

Geeignete Formkörper/Schutzschichtkombinationen sind beispielsweise in der EP 0 320 632 A aufgeführt. Vorzugsweise sind gleichartige Kunststoffe geeignet.

Zum Einsatz im erfindungsgemäßen Schichtsystem geeignete Lacksysteme sind solche, deren vernetzende Komponenten Acrylat-, Allyl-, Epoxy-, Siloxan-, Isocyanat-, Anhydrid-, und/oder Melaminformaldehydfunktionen aufweisen. Umfassende Beschreibungen solcher Lacksysteme finden sich in: "Lehrbuch der Lacke und Beschichtungen", Herausgeber: Dr. Hans Kittel, Verlag Hirzel, Stuttgart, 1998; in "Lackkunstharze" von Hans Wagner, Hans Friedrich Sarx, Carl Hanser Verlag München, 1971; speziell für Epoxy-Harze in "Epoxy Resins, Chemistry and Technology" herausgegeben von Clayton A. May and Yoshio Tanaka bei Marcel Dekker, Inc. New York, 1973, Kapitel 7, Seite 451 ff.

Besonders bevorzugt sind Siloxanlacke wie z. B. in DE 4020316 A beschrieben.

Die Dicke der Lackschichten ist 1 bis 200 µm, bevorzugt 2 bis 50 µm und ganz besonders bevorzugt 2 bis 10µm. Die Viskosität des Lackes beträgt vorzugsweise 5 bis 10.000 mPa s.

Optional können die in den Schichten (A), (B), (C), (D) und/oder (S) eingesetzten Polymere oder Lacke weitere Additive enthalten, wie z. B. die in EP 0 839 623 A1 und EP 0 500 496 A1 beschriebenen Antioxidantien, Flammschutzmittel, Füllmittel, Schaummittel, herkömmliche Farbstoffe und Pigmente, optische Aufheller und Nukleierungsmittel oder ähnliche, bevorzugt in Mengen von jeweils bis zu 5 Gew.%, bevorzugt 0,01 bis 5 Gew.%, bezogen auf die gesamte Mischung, besonders bevorzugt 0,01 bis 1 Gew.%, bezogen auf die Menge Kunststoff. Auch Mischungen dieser Zusatzstoffe sind geeignet.

Darüber hinaus können die Thermoplaste noch übliche Thermostabilisatoren enthalten. Als Thermostabilisatoren sind erfindungsgemäß besonders geeignet: gehinderte Phenole, beispielsweise Octadecyl-3-(3',5'-di-tert.-butyl-4'-hydroxyphenyl)-propionat (Irganox® 1076, Ciba Specialty Chemicals, Basel, Schweiz). Weiterhin sind erfindungsgemäß besonders geeignete Thermostabilisatoren Phosphite, insbesondere Tris(2,4-di-tert.-butyl-phenyl)-phosphit (Irgafos® 168, Ciba Specialty Chemicals, Basel, Schweiz) oder Phosphine wie z. B. Triphenylphosphin.

Die Thermoplaste des erfindungsgemäßen Schichtsystems können ferner übliche Entformungsmittel enthalten. Besonders geeignete Entformungsmittel sind Pentaerythrittetrastearat (PETS) oder Glycerinmonostearat (GMS).

Die organischen Infrarot-Absorber, Ultraviolett-Absorber und sonstige Additive können in die einzelnen Schichten des erfindungsgemäßen Schichtsystems durch bekannte Methoden wie Compoundierung, Einmischen in Lösung, Coextrusion, Kneten, Einmischen beim Spritzguss oder als Masterbatch eingebracht werden.

Das erfindungsgemäße Schichtsystem kann durch bekannte Verfahren wie Lackieren, Coextrudieren, Heißpressen, Tauchen, Kleben, Aufpressen, UV- oder thermische Härtung, Kaschieren, Laminieren, Mehrkomponentenspritzgruß, Auftragen aus Lösung, Hinterspritzen oder ähnliches in einem oder mehreren auch optional verschiedenen Schritten hergestellt werden.

Die so erhaltenen Formkörper können vor oder nach der Lackierung auch durch bekannte Verfahren wie Tiefziehen in die gewünschte Form gebracht werden.

Die Maßnahmen zur Herstellung der transparenten Thermoplasten sind dem Fachmann geläufig.

Das Aufbringen der einzelnen Schichten aufeinander kann zugleich oder unmittelbar nach der Formgebung des Grundkörpers geschehen, z. B. durch Coextrusion oder Mehrkomponentenspritzguss. Das Aufbringen kann aber auch auf den fertig geformten Grundkörper geschehen, z. b. durch Lamination mit einem Film oder durch Beschichtung mit einer Lösung.

Vorzugsweise wird Schicht (A) durch Lackieren, Schicht (B) durch Spritzgießen und Schicht (C) durch Heißlaminieren oder Hinterspritzen mit Schicht (B) hergestellt. Gemäß einer weiteren bevorzugten Ausführungsform der Erfindung werden die Schichten (A) und (B) durch Coextrusion hergestellt.

Alternativ kann Schicht (C) auch aufgeklebt werden. Als Klebstoff für Schicht (C) können beliebige, dem Fachmann zum Verkleben von Kunststoffen bekannte Klebstoffe, beispielsweise solche auf Polyurethan und/oder Acrylat-Basis, eingesetzt werden. Vorzugsweise werden lösungsmittelfreie und hochtransparente Klebstoffe eingesetzt.

Die erfindungsganäßen Schichtsysteme sind universell einsetzbar, wo Wärmedurchlässigkeit unerwünscht ist. Besonders geeignet ist die Anwendung bei Automobilkomponenten, wie z. B. Verscheibungselemente, Autodachfenster, Kunststoffstreuscheiben und architektonischen Anwendungen wie Gebäudeverglasung, Gewächshauskomponenten, Wintergärten, Bushaltestellen oder ähnliche Anwendungen. Dabei können auch Doppelstegplatten oder Multistegplatten verwendete werden. Ferner ist die Anwendung bei Spritzgussteilen wie Lebensmittelbehältern, Bestandteilen von Elektrogeräten und in Brillengläsern, z. B. auch für Schutzbrillen wie Schweißerschutzbrillen, möglich.

Das erfindungsgemäße Schichtsystem eignet sich zur Herstellung von Formkörpern, insbesondere zur Herstellung von transparenten Kunststoffverscheibungselementen wie z.B. Kunststoffverscheibungselementen auf Basis von Polycarbonat und/oder Copolycarbonat. Gegenstand der Erfindung sind daher auch mit dem erfindungsgemäßen Schichtsystem hergestellte Formkörper.

### Beispiele

Im folgenden wird die Erfindung anhand von Ausführungsbeispielen näher beschrieben.

### Herstellung von Probekörpern

Zur Herstellung der Probekörper wurde ein additivfreies, unstabilisiertes Polycarbonat (Makrolon® 2808 bzw. Makrolon® 3108 der Bayer AG, Leverkusen) mit einem mittleren Molekulargewicht von ca. 28.000 bzw. 30.000 (M_{w} nach GPC) bei 300°C auf einem Zweiwellenextruder mit der in Tabelle 1 angegebenen Menge Additiv compoundiert und anschließend granuliert. Aus diesem Granulat wurden anschließend Farbmusterplatten abgespritzt (76 mm x 50 mm x 2,5 mm (Schicht B)).

### Als IR-Absorber wurden folgende Verbindungen eingesetzt:

- IR-Absorber (A):: Vanadyl-5,14,23,32-tetraphenyl-2,3-naphthalocyanin (Aldrich, Steinheim, Deutschland),
- IR-Absorber (B):: Kupfer(II)-1,4,8,11,15,18,22,25-octabutoxy-29H,31H-phthalocyanin (Aldrich, Steinheim, Deutschland) und

Als UV-Absorber wurden 2-(2'-Hydroxy-3'-(2-butyl)-5'(tert.-butyl)-phenyl)-benzotriazol (Tinuvin® 350) und Bis-(3-(2H-benztriazolyl)-2-hydroxy-5-tert.-octyl)methan (Tinuvin® 360) der Ciba Spezialitätenchemie, Basel, Schweiz eingesetzt.

**Tabelle 1**

| Zusammensetzung der Proben | |
|---|---|
| Probe | |
| 1 | Schicht (A): 7 % UV-Absorber in Makrolon® 3108 |
| | Schicht (B): 70 ppm IR-Absorber (A) + 0,3 % UV-Absorber in Makrolon® 2808 |
| | Schicht (C): 3M® Solar Reflecting Film N-NPE 1458LP |
| 2 | Schicht (A): 7 % UV-Absorber in Makrolon® 3108 |
| | Schicht (B): 70 ppm IR-Absorber (B) + 0,3 % UV-Absorber in Makrolon® 2808 |
| | Schicht (C): 3M® Solar Reflecting Film N-NPE 1458LP |

Die Farbmusterplättchen wurden anschließend mit einer 50 bis 70 µm dicken Polycarbonatfolie, bestehend aus 7 % Bis-(3-(2H-benztriazolyl)-2-hydroxy-5-tert.-octyl)methan, (Tinuvin® 360, Ciba Spezialitätenchemie, Basel) in Makrolon® 3108 (Thermoplast), verklebt.

Anschließend wurden die so beschichteten Farbmusterplättchen auf der Seite von Schicht (B) mit einer Reflexfolie vom Typ "Solar Reflecting Film, N-NPE 1458LP (3M®, St. Paul, USA), verklebt, so dass ein Schichtsystem mit folgendem Schichtaufbau erhalten wird:
Schicht (A) - Schicht (B) - Schicht (C).
   Als Klebstoff wurde ein Klebstoff vom Typ Helmitin 35050 (Firma Forbo Helmitin, Pirmasens, DE) eingesetzt.

### Transmissionseigenschaften

Die Transmissionsspektren der Proben 1 und 2 wurden mit einem UV-VIS-NIR-Spektrometer "lamda 9" der Firma Perkin Elmer im Bereich zwischen 300 und 2.500 nm gemessen. Daraus wurden gemäß SAE J 1796 (Ausgabe Mai 1995) die LTA- und TDS-Werte bestimmt.

**Tabelle 2**

| Probe | LTA [%] | TDS [%] |
|---|---|---|
| 1 | 75,8 | 44,1 |
| 2 | 70,7 | 40,0 |

Die Versuchsergebnisse zeigen, dass die erfindungsgemäßen Schichtsysteme bei einfachem Aufbau eine hohe Transparenz (LTA-Wert >70) bei gleichzeitig effizientem Wärmeschutz (TDS-Wert < 50) aufweisen. Ein besonders ausgewogenes Verhältnis von LTA- und TDS-Wert wird durch Einsatz des IR-Absorbers Vanadyl-5,14,23,32-tetraphenyl-2,3-naphthalocyanin im erfindungsgemäßen Schichtaufbau erzielt (Probe 1). Daneben weisen die erfindungsgemäßen Schichtsysteme eine ausgezeichnete Langzeit-Witterungsstabilität auf. Selbst nach einer Xe-WOM Bewitterung von 3.000 Stunden zeichnen sich die erfindungsgemäßen Schichtsysteme durch ein ausgezeichnetes Transparenzverhalten sowie durch hervorragende Glanzwerte aus.

## Patentansprüche

1. Wärrneabsorbierendes Schichtsystem, enthaltend mindestens eine erste Schicht (A), eine zweite Schicht (B) und eine dritte Schicht (C), wobei - Schicht (A) Ultraviolett-Absorber jedoch keinen Infrarot-Absorber enthält, - Schicht (B) organischen Infrarot-Absorber und Ultraviolett-Absorber enthält und - Schicht (C) eine im Infrarotbereich reflektierende Interferenzschicht ist.

2. Schichtsystem nach Anspruch 1, **dadurch gekennzeichnet, dass** die Interferenzschicht (C) ein selektiv reflektierendes Wechselschichtsystem ist, das mindestens zwei transparente Schichten (C1) und (C2) mit unterschiedlichen Brechungsindizes enthält.

3. Schichtsystem nach Anspruch 2, **dadurch gekennzeichnet, dass** Schicht (C) eine Vielzahl, insbesondere bis 2.000, von alternierend übereinander angeordneten Schichten (C1) und (C2) umfasst.

4. Schichtsystem nach Anspruch 2 oder 3, **dadurch gekennzeichnet, dass** die Schichten (C1) und (C2) unterschiedliche thermoplastische Materialien enthalten.

5. Schichtsystem nach Anspruch 1, **dadurch gekennzeichnet, dass** Schicht (C) ein selektiv reflektierendes Wechselschichtsystem aus Metall-, Oxid-, Nitrid und/oder Oxynitridschichten ist.

6. Schichtsystem nach einem der vorangegangenen Ansprüche, **dadurch gekennzeichnet, dass** die Schichten (A) und (B) eine Dicke von jeweils 1 bis 100 µm aufweisen.

7. Schichtsystem nach Anspruch 1, **dadurch gekennzeichnet, dass** Schicht (C) eine Dicke von 0,1 bis 200 µm aufweist.

8. Schichtsystem nach einem der vorangegangenen Ansprüche, **dadurch gekennzeichnet, dass** der Infrarot-Absorber ausgewählt ist aus der Gruppe der Phthalocyanine, Naphthalocyanine und Perylene.

9. Schichtsystem nach einem der vorangegangenen Ansprüche, **dadurch gekennzeichnet, dass** der Ultraviolett-Absorber ausgewählt ist aus der Gruppe der Hydroxy-Benzotriazole, Hydroxy-Triazine, Hydroxy-Benzophenone und arylierten Cyanoacrylate.

10. Schichtsystem nach einem der vorangegangenen Ansprüche, **dadurch gekennzeichnet, dass** die Schichten (A) und (B) Schichten auf Polymer- und/oder Lackbasis sind.

11. Schichtsystem nach Anspruch 10, **dadurch gekennzeichnet, dass** als Polymer ein transparenter Thermoplast, insbesondere ein Polycarbonat oder ein Copolycarbonat, eingesetzt wird.

12. Schichtsystem nach einem der vorangegangenen Ansprüche, **dadurch gekennzeichnet, dass** die einzelnen Schichten, beginnend mit der der Lichteinstrahlung zugewandten Seite, in folgender Reihenfolge angeordnet sind: Schicht (A) - Schicht (B) - Schicht (C) oder Schicht (A) - Schicht (C) - Schicht (B).

13. Schichtsystem nach Anspruch 12, **dadurch gekennzeichnet, dass** Schicht (A) als Lack oder als polymere Schicht und Schicht (B) als polymere Schicht aus gebildet sind.

14. Schichtsystem nach einem der vorangegangenen Ansprüche, **dadurch gekennzeichnet, dass** das Schichtsystem ein Substrat (S) auf Basis von Glas oder einem transparenten thermoplastischen Polymeren, insbesondere Polycarbonat oder Polyestercarbonat, umfasst.

15. Schichtsystem nach Anspruch 14, **gekennzeichnet durch** folgenden Schichtaufbau, beginnend mit der der Lichteinstrahlung zugewandten Seite: Schicht (A) - Schicht (B)
- Substrat (S) - Schicht (C) oder Schicht (A) - Substrat (S) - Schicht (B) - Schicht (C) oder Schicht (A) - Substrat (S) - Schicht (C) - Schicht (B).

16. Schichtsystem nach Anspruch 14 oder 15, **dadurch gekennzeichnet, dass** Schicht (B) als Substrat (S) ausgebildet ist.

17. Schichtsystem nach einem der Ansprüche 14 bis 16, **dadurch gekennzeichnet, dass** das Substrat (S) eine Dicke von 1 bis 30 mm, insbesondere von 3 bis 5 mm aufweist**.**

18. Verfahren zur Herstellung eines Schichtsystems gemäß einem der Ansprüche 1 bis 17, **dadurch gekennzeichnet, dass** das Schichtsystem durch Coextrusion, Mehrkomponenten-Spritzguss, Spritzgießen, Hinterspritzen, Aufsprühen, Verkleben und/oder Auflaminieren der einzelnen Schichten (A), (B) und (C) sowie gegebenenfalls weiterer Schichten wie dem Substrat (S) hergestellt wird.

19. Verfahren nach Anspruch 18, **dadurch gekennzeichnet, dass** Schicht (A) durch Lackieren, Schicht (B) durch Spritzgießen und Schicht (C) durch Heißlaminieren oder Hinterspritzen mit Schicht (B) hergestellt wird.

20. Verfahren nach Anspruch 18 bis 19, **dadurch gekennzeichnet, dass** die Schichten (A) und (B) durch Coextrusion hergestellt werden.

21. Formkörper, enthaltend ein Schichtsystem gemäß einem der Ansprüche 1 bis 17.

22. Formkörper nach Anspruch 21, **dadurch gekennzeichnet, dass** der Formkörper ein transparentes Kunststoffverscheibungselement, insbesondere ein transparentes Kunststoffverscheibungselement auf Basis von Polycarbonat und/oder Copolycarbonat ist.

23. Verwendung eines Schichtsystems gemäß einem der Ansprüche 1 bis 17 zur Wärmestrahlungsabschirmung von Kunststoffverscheibungselementen.

## Claims

1. Heat-absorbing layer system containing at least a first layer (A), a second layer (B) and a third layer (C), wherein
- layer (A) contains ultraviolet absorber, but no infrared absorber;
- layer (B) contains organic infrared absorber and ultraviolet absorber; and
- layer (C) is an interference layer reflecting in the infrared range.

2. A layer system according to claim 1, **characterised in that** the interference layer (C) is a selectively reflecting alternating layer system which contains at least two transparent layers (C1) and (C2) with different refractive indices.

3. A layer system according to claim 2, **characterised in that** layer (C) comprises a multiplicity, particularly to 2,000, of layers (C1) and (C2) arranged alternately one above the other.

4. A layer system according to claim 2 or 3, **characterised in that** layers (C1) and (C2) contain different thermoplastic materials.

5. A layer system according to claim 1, **characterised in that** layer (C) is a selectively reflecting alternating layer system of metal, oxide, nitride and/or oxynitride layers.

6. A layer system according to any one of the preceding claims, **characterised in that** the layers (A) and (B) have a thickness of 1 µm to 100 µm in each case.

7. A layer system according to claim 1, **characterised in that** layer (C) has a thickness of 0.1 µm to 200 µm.

8. A layer system according to any one of the preceding claims, **characterised in that** the infrared absorber is selected from the group comprising phthalocyanines, naphthalocyanines and perylenes.

9. A layer system according to any one of the preceding claims, **characterised in that** the ultraviolet absorber is selected from the group comprising hydroxybenzotriazoles, hydroxytriazines, hydroxybenzophenones and arylated cyanoacrylates.

10. A layer system according to any one of the preceding claims, **characterised in that** layers (A) and (B) are layers based on polymer and/or lacquer.

11. A layer system according to claim 10, **characterised in that** the polymer used is a transparent thermoplastic, particularly a polycarbonate or a copolycarbonate.

12. A layer system according to any one of the preceding claims, **characterised in that** the individual layers, starting with the side facing the incident light radiation, are arranged in the following order:
layer (A) - layer (B) - layer (C) or
layer (A) - layer (C) - layer (B).

13. A layer system according to claim 12, **characterised in that** layer (A) is designed as a lacquer or as a polymer layer and layer (B) is designed as a polymer layer.

14. A layer system according to any one of the preceding claims, **characterised in that** the layer system comprises a substrate (S) based on glass or a transparent thermoplastic polymer, particularly polycarbonate or polyester carbonate.

15. A layer system according to claim 14, **characterised by** the following layer structure, starting with the side facing the incident light radiation:
layer (A) - layer (B) - substrate (S) - layer (C) or
layer (A) - substrate (S) - layer (B) - layer (C) or
layer (A) - substrate (S) - layer (C) - layer (B).

16. A layer system according to claim 14 or 15, **characterised in that** layer (B) is designed as substrate (S).

17. A layer system according to any one of claims 14 to 16, **characterised in that** the substrate (S) has a thickness of 1 mm to 30 mm, particularly 3 mm to 5 mm.

18. A process for the preparation of a layer system according to any one of claims 1 to 17, **characterised in that** the layer system is produced by coextrusion, multi-component injection moulding, injection moulding, back injection, spraying, bonding and/or laminating of the individual layers (A), (B) and (C), and optionally of further layers such as the substrate (S).

19. A process according to claim 18, **characterised in that** layer (A) is produced by coating, layer (B) by injection moulding and layer (C) by hot laminating or back injection with layer (B).

20. A process according to claim 18 to 19, **characterised in that** the layers (A) and (B) are produced by coextrusion.

21. Moulded article containing a layer system according to any one of claims 1 to 17.

22. Moulded article according to claim 21, **characterised in that** the moulded article is a transparent plastics glazing element, particularly a transparent plastic glazing element based on polycarbonate and/or copolycarbonate.

23. The use of a layer system according to any one of claims 1 to 17 for shielding plastic glazing elements from heat radiation.

## Revendications

1. Système multicouche absorbant la chaleur, contenant au moins une couche (A), une deuxième couche (B) et une troisième couche (C), la couche (A) contenant un absorbeur d'ultraviolet mais pas d'absorbeur d'infrarouge, la couche (B) contenant un absorbeur organique d'infrarouge et un absorbeur d'ultraviolet et la couche (C) consistant en une couche à interférences réfléchissant dans l'infrarouge.

2. Système multicouche selon la revendication 1, **caractérisé en ce que** la couche à interférences (C) est un système à couches alternées réfléchissant sélectivement, qui contient au moins deux couches transparentes (C1) et (C2) à indices de réfraction différents.

3. Système multicouche selon la revendication 2, **caractérisé en ce que** la couche (C) comprend un grand nombre, en particulier jusqu'à 2000 couches (C1) et (C2) disposées les unes sur les autres en alternance.

4. Système multicouche selon la revendication 2 ou 3, **caractérisé en ce que** les couches (C1) et (C2) contiennent des matières thermoplastiques différentes.

5. Système multicouche selon la revendication 1, **caractérisé en ce que** la couche (C) est un système à couches alternantes réfléchissant sélectivement et consistant en couches de métaux, d'oxydes, de nitrures et/ou d'oxynitrures.

6. Système multicouche selon l'une des revendications qui précèdent, **caractérisé en ce que** les couches (A) et (B) ont une épaisseur de 1 à 100 µm chacune.

7. Système multicouche selon la revendication 1, **caractérisé en ce que** la couche (C) a une épaisseur de 0,1 à 200 µm.

8. Système multicouche selon l'une des revendications qui précèdent, **caractérisé en ce que** l'absorbeur d'infrarouge est choisi dans le groupe des phtalocyanines, des naphtalocyanines et des pérylènes.

9. Système multicouche selon l'une des revendications qui précèdent, **caractérisé en ce que** l'absorbeur d'ultraviolet est choisi dans le groupe des hydroxybenzotriazoles, des hydroxytriazines, des hydroxybenzophénones, et des cyanacrylates arylés.

10. Système multicouche selon l'une des revendications qui précédent, **caractérisé en ce que** les couches (A) et (B) sont des couches à base de polymères et/ou de vernis.

11. Système multicouche selon la revendication 10, **caractérisé en ce que** le polymère utilisé est une résine thermoplastique transparente, consistant plus spécialement en un polycarbonate ou un copolycarbonate.

12. Système multicouche selon l'une des revendications qui précèdent, **caractérisé en ce que** les couches individuelles sont disposées dans l'ordre suivant, en commençant par la face exposée à la lumière incidente : couche (A) - couche (B) - couche (C) ou couche (A) - couche (C) - couche (B).

13. Système multicouche selon la revendication 12, **caractérisé en ce que** la couche (A) consiste en un vernis ou en un polymère et la couche (B) en un polymère.

14. Système multicouche selon l'une des revendications qui précèdent, **caractérisé en ce qu'**il comprend un support (S) à base de verre ou d'un polymère thermoplastique transparent, en particulier un polycarbonate ou un polyester-carbonate.

15. Système multicouche selon la revendication 14, **caractérisé par** la disposition suivante des couches, en partant de la face qui reçoit la lumière incidente : couche (A) - couche (B) - support (S) - couche (C) ou couche (A) - support (S) - couche (B) - couche (C) ou couche (A) - support (S) - couche (C) - couche (B).

16. Système multicouche selon la revendication 14 ou 15, **caractérisé en ce que** la couche (B) constitue le support (S).

17. Système multicouche selon l'une des revendications 14 à 16, **caractérisé en ce que** le support (S) a une épaisseur de 1 à 30 mm, plus spécialement de 3 à 5 mm.

18. Procédé pour la préparation d'un système multicouche selon l'une des revendications 1 à 17, **caractérisé en ce que** l'on opère par co-extrusion, moulage par injection à plusieurs composants, coulée par injection, injection à l'arrière d'une autre face, pulvérisation, collage et/ou laminage des couches individuelles (A), (B) et (C) et le cas échéant d'autres couches telles que le support (S).

19. Procédé selon la revendication 18, **caractérisé en ce que** la couche (A) est obtenue par application d'un vernis, la couche (B) par moulage par injection et la couche (C) par laminage à chaud ou injection à l'arrière de la couche (B).

20. Procédé selon les revendications 18 à 19, **caractérisé en ce que** les couches (A) et (B) sont obtenues par co-extrusion.

21. Objets moulés contenant un système multicouche selon l'une des revendications 1 à 17.

22. Objets moulés selon la revendication 21, **caractérisés en ce qu'**ils consistent en un élément de vitrage transparent en résine synthétique, plus spécialement un élément de vitrage transparent de résine synthétique à base de polycarbonate et/ou de copolycarbonate.

23. Utilisation d'un système multicouche selon l'une des revendications 1 à 17 pour limiter la transmission de chaleur par des éléments de vitrage en résine synthétique.
